(19) Europäisches Patentamt
European Patent Office
Office européen des brevets

(11) Publication number: **0 303 782 B1**

# (12) EUROPEAN PATENT SPECIFICATION

(45) Date of publication of patent specification: **11.01.95**

(51) Int. Cl.[6]: **C08L 51/04**, C08L 55/02

(21) Application number: **88108958.5**

(22) Date of filing: **04.06.88**

## (54) Resin Composition.

(30) Priority: **18.08.87 JP 205400/87**

(43) Date of publication of application:
**22.02.89 Bulletin 89/08**

(45) Publication of the grant of the patent:
**11.01.95 Bulletin 95/02**

(84) Designated Contracting States:
**DE FR GB**

(56) References cited:
**EP-A- 0 180 819**
**US-A- 4 554 316**

(73) Proprietor: **Sumitomo Dow Limited**
**2-4, Nakanoshima 3-chome, Kita-ku**
**Osaka (JP)**

(72) Inventor: **Hirai, Mikio**
**4-6, Hoshigoe-cho**
**Niihama-shi**
**Ehime-ken (JP)**
Inventor: **Tatsuda, Tokuo**
**2-15-13, Nishibara-cho**
**Niihama-shi**
**Ehime-ken (JP)**

(74) Representative: **von Kreisler, Alek, Dipl.-Chem. et al**
**Patentanwälte**
**von Kreisler-Selting-Werner**
**Postfach 10 22 41**
**D-50462 Köln (DE)**

EP 0 303 782 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### Field of the Invention

The present invention relates to a thermoplastic resin composition which can provide a delustered (low gloss) molded article having improved properties such as weather resistance and impact resistance.

### Description of the Related Art

Terpolymers of conjugated diene rubber, an aromatic vinyl compound and a cyanated vinyl compound a typical example of which is an ABS resin (acrylonitrile-diene rubber-styrene copolymer) and non-conjugated diene rubber reinforced resins a typical example of which is an AES resin (acrylonitrile-ethylene/propylene rubber-styrene copolymer) have good weather resistance, moldability and mechanical properties. Therefore, these resins are used as material of, for example, automobile parts, business machine parts and haberdasheries.

In view of safety and matching with other parts or of achieving a mat type calm hand, low gloss delustered resin articles are desired for the automobile parts, particularly, the automobile interior parts.

To impart a delustered surface to a resin article, improvement of a mold such as thin embossing or modification of a resin material is contemplated. When the improvement of the mold is employed, since a resin melt is completely adhered to the mold surface during molding, the mold surface is greatly abrased so that the mold is frequently embossed. In addition, a delustering condition is influenced by molding conditions. To modify the resin material, addition of a filler or a rubbery polymer is proposed. However, the addition of filler is not preferable in view of appearance and mechanical properties of the molded article. The addition of rubbery polymer causes many flow marks and/or weld marks so that no satisfactory molded article is produced.

To improve surface properties including delustering of the ABS resins or the non-conjugated diene rubber reinforced resins without deteriorating their inherent good properties, it was proposed to formulate an epoxy group-containing olefin copolymer in the resins (cf. U.S. Patent No. 4,554,316 and copending U.S. Patent Application Ser. No. 948,427). However, it has been desired to provide a new composition which affords a delustered molded article having improved impact strength.

### SUMMARY OF THE INVENTION

One object of the present invention is to provide a thermoplastic resin composition which has improved delustering effects.

Another object of the present invention is to provide a thermoplastic resin composition which affords a delustered molded article having improved weather resistance and impact strength.

Accordingly, the present invention provides a thermoplastic resin composition comprising:

(A) a polymer selected from the group consisting of a conjugated diene rubber-reinforced resin which comprises a graft copolymer which is obtainable by polymerizing at least two monomers selected from the group consisting of aromatic vinyl compounds, cyanated vinyl compounds, alkyl unsaturated carboxylates and maleimide compounds in the presence of a conjugated diene rubber and a resin comprising a graft copolymer which is obtainable by polymerizing at least one monomer selected from the group consisting of aromatic vinyl compounds, cyanated vinyl compounds, alkyl unsaturated carboxylates and maleimide compounds in the presence of a rubber selected from (i) ethylene-$\alpha$-olefin base rubbers, (ii) alkyl acrylate base rubbers which are obtainable by polymerizing or copolymerizing at least one monomer selected from the group consisting of $C_1$-$C_{16}$-alkyl acrylate and optionally at least one of other copolymerizable monomers in the presence or absence of a cross linking agent, (iii) ethylene-vinyl acetate copolymers and (iv) chlorinated polyethylene, each of which may be used independently or as a mixture and

(B) a graft copolymer which is obtainable by polymerizing

(b-1) at least one monomer selected from the group consisting of aromatic vinyl compounds, cyanated vinyl compounds and alkyl unsaturated carboxylates and

(b-2) at least one unsaturated epoxy monomer in the presence of an ethylene-$\alpha$-olefin base rubber wherein the content of the graft polymer (B) is between 0,5 % by weight and 90 % by weight

based on a total weight of the resin (A) and the graft copolymer (B).

## DETAILED DESCRIPTION OF THE INVENTION

The thermoplastic resin composition of the present invention will be illustrated in detail.

### Polymer (A)

The conjugated diene rubber-reinforced resin is (A-1) a graft copolymer which is obtainable by polymerizing at least two monomers selected from the group consisting of aromatic vinyl compounds, cyanated vinyl compounds, alkyl unsaturated carboxylates and maleimide compounds in the presence of an conjugated diene rubber or (A-2) a mixture of such graft polymer (A-1) and a copolymer comprising at least two of the above described monomers.

The rubber-(i) to (iv)-reinforced resin is (A'-1) a graft copolymer which is obtainable by polymerizing at least one monomer selected from the group consisting of aromatic vinyl compounds, cyanated vinyl compounds, alkyl unsaturated carboxylates add maleimide compounds in the presence of the rubber (i) to (iv) or (A'-2) a mixture of such graft copolymer (A'-1) and a copolymer comprising at least two of the above described monomers.

Examples of the conjugated diene rubber are polybutadiene, butadiene-styrene copolymer and butadiene-acrylonitrile copolymer. They may be used independently or as a mixture thereof. There is no limitation on a gel content in the conjugated diene rubber.

Examples of the rubber (i) to (iv) are for (i) ethylene-α-olefin base rubbers (e.g. a rubber of ethylene with propylene or butene (EPR), a rubber of ethylene, propylene or butene and a non-conjugated diene (EPDM)), (ii) alkyl acrylate base rubbers which are obtainable by polymerizing or copolymerizing at least one monomer selected from the group consisting of $C_1$-$C_{16}$-alkyl acrylate (e.g. methyl acrylate, ethyl acrylate, butyl acrylate, 2-ethylhexyl acrylate, etc.) and optionally at least one of other copolymerizable monomers in the presence or absence of a cross linking agent, (iii) ethylene-vinyl acetate copolymers and (iv) chlorinated polyethylene. These may be used independently or as a mixture. Particularly, the ethylene-α-olefin base rubbers (i) and the alkyl acrylate base rubbers (ii) are preferred.

Specific examples of the aromatic vinyl compound are styrene, α-methylstyrene, α-chlorostyrene, p-tert.-butylstyrene, o-methylstyrene, m-methylstyrene, p-methylstyrene, dimethylstyrene, o-chlorostyrene, p-chlorostyrene, 2,5-dichlorostyrene, 3,4-dichlorostyrene, p-bromostyrene, o-bromostyrene, 2,5-dibromostyrene, 3,4-dibromostyrene, cyanostyrene, 2-isopropenylnaphthalene, α-methylvinyltoluene, vinylnaphthalene, and mixtures thereof. Among them, styrene and α-methylstyrene are preferred.

Specific examples of the cyanated vinyl compound are acrylonitrile, methacrylonitrile, ethacrylonitrile, maleonitrile, fumaronitrile, and mixtures thereof. Among them, acrylonitrile is preferred.

Specific examples of the alkyl unsaturated carboxylate are methyl acrylate, ethyl acrylate, propyl acrylate, butyl acrylate, benzyl acrylate, hexyl acrylate, hydroxyethyl acrylate, hydroxypropyl acrylate, methyl methacrylate, ethyl methacrylate, propyl methacrylate, butyl methacrylate, benzyl methacrylate, hexyl methacrylate, hydroxyethyl methacrylate, hydroxypropyl methacrylate, and mixtures thereof. Among them, methyl methacrylate is preferred.

Specific examples of the maleimide compounds are maleimide, N-methyl maleimide, N-ethyl maleimide, N-isopropyl maleimide, N-butyl maleimide, N-hexyl maleimide, N-octyl maleimide, N-lauryl maleimide, N-cyclohexyl maleimide, N-phenyl maleimide, N-2, 3 or 4-methylphenyl maleimide, N-2, 3 or 4-ethylphenyl maleimide, N-2, 3 or 4-butylphenyl maleimide, N-2,6-dimethylphenyl maleimide, N-2, 3 or 4-chlorophenyl maleimide, N-2, 3 or 4-bromophenyl maleimide, N-2,5-dichlorophenyl maleimide, N-3,4-dichlorophenyl maleimide, N-2,5-dibromophenyl maleimide, N-3,4-dibromophenyl maleimide, N-2,4,6-trichlorophenyl maleimide, N-2,4,6-tribromophenyl maleimide, N-2, 3 or 4-hydroxyphenyl maleimide, N-2, 3 or 4-phenyl maleimide, N-2, 3 or 4-carboxyphenyl maleimide, N-4-nitrophenyl maleimide, N-4-diphenyl maleimide, N-1-naphthylphenyl maleimide, N-4-cyanophenyl maleimide, N-4-phenoxyphenyl maleimide, N-4-benzylphenyl maleimide, N-2-methyl-5-chlorophenyl maleimide and N-2-methoxy-5-chlorophenyl maleimide. They may be used independently or as a mixture thereof. Particularly, N-phenyl maleimide is preferred.

The content of the (i) to (iv) or conjugated diene rubber in the graft polymer (A-1) or (A'-1) is not critical. Preferably, it is from 5 to 70 % by weight, preferably from 5 to 40 % by weight in view of the property balance. A particle size of the graft polymer (A-1) or (A'-1) is not critical either. Preferably, it is from 0.05 to 5 μm, particularly from 0.1 to 0.5 μm.

In the preparation of the graft polymer (A-1) or (A'-1), there is no specific limitation on the combination of the monomers to be grafted. In both graft polymers, a combination of the aromatic vinyl monomer with at least one monomer selected from the group consisting of the cyanated vinyl monomers, the alkyl unsaturated carboxylates and the maleimide compounds is preferred. In this combination, a ratio of two

kinds of the monomers is not critical. Preferably, 50 to 80 % by weight of the aromatic vinyl monomer and 50 to 20 % by weight of other monomer are used.

There is not limitation on a composition of the copolymer (A-2) or (A'-2). Preferably, the copolymer comprises 50 to 90 % by weight of he aromatic vinyl monomer and 50 to 10 % by weight of at least one monomer selected from the group consisting of the cyanated vinyl monomers, the alkyl unsaturated carboxylates and the maleimide compounds.

The weight ratio of the graft polymer (A-1) or (A'-1) to the copolymer (A-2) or (A'-2) is preferably from 10:90 to 100:0. When the content of the graft polymer is less than 10 % by weight, the impact strength of the molded article is not sufficiently improved.

The graft polymer (A-1) or (A'-1) may be prepared by any of conventional methods such as emulsion polymerization, suspension polymerization, bulk polymerization, solution polymerization, emulsion-suspension polymerization and bulk-suspension polymerization.

Polymer (B)

The ethylene-α-olefin base rubber constituting the polymer (B) includes a rubber of ethylene with propylene or butene (EPR), a rubber of ethylene, propylene or butene and a non-conjugated diene (EPDM) and the like. They may be used independently or as a mixture thereof.

Examples of the non-conjugated diene contained in the EPDM rubber are dicyclopentadiene, ethylidenenorbornene, 1,4-hexadiene, 1,4-cyclobutadiene and 1,5-cyclooctadiene.

In the EPR rubber and the EPDM rubber, a molar ratio of ethylene to propylene or butene is preferably from 5:1 to 1:3.

In the terpolymer (EPDM), the non-conjugated diene is contained in an amount corresponding to an iodine value of 2 to 50.

The unsaturated epoxide monomer is a monomer having at least one unsaturated bond which can contribute to polymerization and at least one epoxy group in one molecule. Examples of such epoxide monomer are

an unsaturated glycidyl ester of the formula:

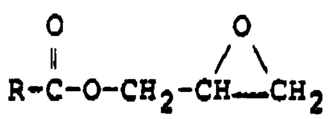

(I)

wherein R is a hydrocarbon group having a polymerizable ethylenically unsaturated bond,

an unsaturated glycidyl ether of the formula:

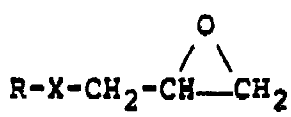

(II)

wherein R is the same as defined in the formula (I), and X is a divalent group of the formula: $-CH_2-O-$ or

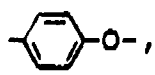

and

an epoxyalkene of the formula:

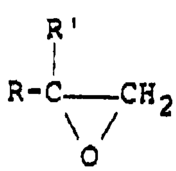

(III)

wherein R is the same as defined in the formula (I), and R′ is hydrogen or methyl. Specific examples of these epoxide monomers are glycidyl acrylate, glycidyl methacrylate, mono-and di-glycidyl ester of itaconic acid, mono-, di- and tri-glycidyl ester of butenetricarboxylic acid, mono- and di-glycidyl ester of citraconic acid, mono- and di-glycidyl ester of endo-cis-bicyclo[2.2.1]hept-5-ene-2,3-dicarboxylic acid (trade name: Nadic acid), mono- and di-glycidyl ester of endo-cis-bicyclo[2.2.1]hept-5-ene-2-methyl-2,3-dicarboxylic acid (trade name: Methylnadic acid), mono- and di-glycidyl ester of allylsuccinic acid, glycidyl ester of p-styrenecarboxylic acid, allylglycidyl ether, 2-methylallylglycidyl ether, styrene-p-glycidyl ether or p-glycidylstyrene, 3,4-epoxy-1-butene, 3,4-epoxy-3-methyl-1-butene, 3,4-epoxy-1-pentene, 3,4-epoxy-3-methyl-1-pentene, 5,6-epoxy-1-hexene and vinylcyclohexene monoxide.

A ratio of the ethylene-α-olefin base rubber to the monomers in the polymerization of the graft copolymer (B) is not critical. In view of physical properties of the produced resin composition, preferably, 10 to 2,000 parts by weight, particularly 20 to 1,000 parts by weight of at least one monomer selected from the group consisting of aromatic vinyl monomers, cyanated vinyl monomers and alkyl esters of unsaturated carboxylic acids and 0.5 to 800 parts by weight, particularly 1 to 400 parts by weight of the unsaturated epoxide monomer are used per 100 parts by weight of the rubber.

Although at least one monomer selected from the group consisting of aromatic monomers, cyanated vinyl monomers and alkyl unsaturated carboxylates is copolymerized with the unsaturated epoxide monomer in the presence of the ethylene-α-olefin base rubber, a combination of the aromatic vinyl monomer and the cyanated vinyl monomer and/or the alkyl unsaturated epoxide monomer is preferred.

As the graft copolymerization method, any of conventional methods such as emulsion, suspension, solution, bulk, emulsion-suspension and bulk-suspension polymerization may be employed.

A ratio of the rubber reinforced resin (A) and the graft copolymer (B) is not critical. Practically, 0.5 to 90 % by weight of the graft copolymer (B) is contained based on a total weight of the resin (A) and the graft copolymer (B). When the content of the graft copolymer (B) is less than 0.5 % by weight, the delustering effect is not desirably obtained. When it is larger than 90 % by weight, the weather resistance and color development tend to be deteriorated.

The molding resin composition of the present invention may contain a conventionally used additives such as a dye, a pigment, a stabilizer, a plasticizer, an antistatic agent, an ultraviolet light absorbing agent, a lubricant and a filler.

## PREFERRED EMBODIMENTS OF THE INVENTION

The present invention will be illustrated by following examples, in which "parts" and "%" are by weight unless otherwise indicated.

### Examples 1-2 and Comparative Examples 1-4

To a commercially available heat resistant ABS resin ("Kralastick K-2938A" manufactured by Sumitomo Naugatuck Co., Ltd.), Graft copolymer (B)-1 or a conventional delustering agent was added and kneaded by a Banbury mixer. The resultant mixture was pelletized. Then, the pellets were molded to form a test piece, which was subjected to measurement of physical properties and surface gloss. The composition and the results are shown in Table 1.

### Preparation of Graft copolymer (B)-1

By a conventional solution polymerization method, styrene (40 parts), acrylonitrile (17 parts) and glycidyl methacrylate (7 parts) were polymerized in the presence of EPDM rubber of ethylene, propylene and dicyclopentadiene (iodine value: 10, Mooney viscosity: 60, propylene content: 40 %) (50 parts) to give Polymer (B)-1.

Table 1

| Example No. | 1 | 2 | Comp. 1 | Comp. 2 | Comp. 3 | Comp. 4 |
|---|---|---|---|---|---|---|
| Composition (parts) | | | | | | |
| ABS resin K-2938A | 100 | 100 | 100 | 100 | 100 | 100 |
| Graft copolymer (B)-1 | 5 | 10 | --- | --- | --- | --- |
| Talc*1) | --- | --- | --- | 5 | --- | --- |
| S.B block polymer*2) | --- | --- | --- | --- | 5 | --- |
| E-GMA*3) | --- | --- | --- | --- | --- | 5 |
| Properties | | | | | | |
| Notched Izod impact strength 0.635cm (1/4"), 23°C, J/m (kg.cm/cm) | 248.1 (25.3) | 331.4 (33.8) | 176.5 (18.0) | 98.1 (10.0) | 191.2 (19.5) | 171.6 (17.5) |
| Presence of flow marks | No | No | No | Yes | Yes | No |
| Gloss (60° specular gloss) (%) | 25 | 18 | 90 | 40 | 45 | 20 |

Note: *1) "Micron White No. 5000" manufactured by Hayashi Kasei.
*2) "Toughprene A" manufactured by Asahi Chemical.
*3) Ethylene-glycidyl methacrylate copolymer (weight ratio of 90:10).

Examples 3-5 and Comparative Examples 5-7

An ABS resin and Graft copolymer (B)-2 were prepared by the below described methods. Then, the graft polymer or the copolymer and Graft copolymer (B)-2 were kneaded by the Banbury mixer. Then, the

mixture was processed to form a test piece, and its physical properties were measured in the same manner as in Example 1.

Preparation of ABS resin

By a conventional emulsion polymerization method, styrene (35 parts) and acrylonitrile (15 parts) were polymerized in the presence of polybutadiene rubber latex having a weight average particle size of 0.43 µm and a gel content of 85 % (solid content 50 %) (100 parts) to give a graft polymer having a rubber content of about 50 %.

Styrene, acrylonitrile and methyl methacrylate or N-phenyl maleimide were emulsion polymerized according to a conventional method to give a copolymer.

Preparation of Graft copolymer (B)-2

By a conventional solution polymerization method, styrene (75 parts), acrylonitrile (25 parts) and glycidyl methacrylate (10 parts) were polymerized in the presence of EPDM rubber of ethylene, propylene and ethylidenenorbornene (iodine value: 8, Mooney viscosity: 61, propylene content: 43 %) (20 parts) to give Graft copolymer (B)-2.

The results are shown in Table 2.

Table 2

| Example No. | 3 | Comp. 5 | 4 | Comp. 6 | 5 | Comp. 7 |
|---|---|---|---|---|---|---|
| **Composition** | | | | | | |
| ABS resin (parts) | 90 | 100 | 90 | 100 | 90 | 100 |
| i) Graft polymer (%) | 30 | 30 | 30 | 30 | 30 | 30 |
| ii) A-S copolymer *4) (%) | 70 | 70 | --- | --- | --- | --- |
| A-M-S copolymer *5) (%) | --- | --- | 70 | 70 | --- | --- |
| A-MI-S copolymer *6) (%) | --- | --- | --- | --- | 70 | 70 |
| Graft copolymer (B)-2 | 10 | --- | 10 | --- | 10 | --- |
| **Properties** | | | | | | |
| Notched Izod impact strength 0.635cm (1/4"), 23°C J/m (kg.cm/cm) | 233.4 (23.8) | 150.0 (15.3) | 189.2 (19.3) | 124.5 (12.7) | 150.0 (15.3) | 80.4 (8.2) |
| Gloss (60° specular gloss) (%) | 28 | 94 | 26 | 93 | 20 | 91 |

Note: *4) Acrylonitrile-styrene copolymer (weight ratio of 29:71).

*5) Acrylonitrile-methyl methacrylate-styrene terpolymer (weight ratio of 15:60:25).

*6) Acrylonitrile-N-phenyl maleimide-styrene terpolymer (weight ratio of 17:30:53).

Examples 6-13 and Comparative Examples 8-16

In the same manner as in Example 1 but using a non-conjugated diene rubber-reinforced resin (A) prepared by the below described method and the graft copolymer (B) (Graft copolymer (B)-1 or (B)-2) or a conventional delustering agent as shown in Table 3, a test piece was prepared and its properties were measured. The results are shown in Tables 3 and 4.

Preparation of graft polymers (A)-1

A-1-i

By a conventional suspension polymerization method, styrene (34 parts) and acrylonitrile (16 parts) were polymerized in the presence of EPDM rubber of ethylene-propylene-ethylidenenorbornene (propylene content: 43 %, iodine value: 9, Mooney viscosity: 87) (15 parts) to give a graft polymer A-1-i.

A-1-ii

By a conventional solution polymerization method, styrene (45 parts) and methyl methacrylate (40 parts) were polymerized in the presence of EPDM rubber of ethylene-propylene-ethylidenenorbornene (propylene content: 50 %, iodine value: 21, Mooney viscosity: 75) (15 parts) to give a graft polymer A-1-ii.

A-1-iii

By a conventional emulsion polymerization method, styrene (35 parts) and acrylonitrile (15 parts) were polymerized in the presence of cross linked butyl acrylate-acrylonitrile rubber (acrylonitrile content: 5 %) (50 parts) to give a graft polymer A-1-iii (average particle size of the rubber: 0.23 $\mu$m).

Preparation of Polymer (A)-2

A-2-i

In a reactor an interior of which had been replaced with nitrogen, potassium persulfate (0.3 part) and pure water (120 parts) were charged and heated to 65°C with stirring. Then, a monomer mixture of acrylonitrile (30 parts), styrene (70 parts) and tert.-dodecylmercaptan (0.3 part) and an aqueous solution of an emulsifier containing disproportionated potassium resinate (2 parts) were continuously added over 4 hours, respectively. Then, the reaction system was heated to 70°C and kept at the same temperature for 3 hours to complete the polymerization to give an acrylonitrile-styrene copolymer latex. To the resultant latex, potassium chloride was added to salt out the polymer, which was dehydrated and dried to obtain a powdery polymer A-2-i.

A 2-ii

In a reactor an interior of which had been replaced with nitrogen, pure water (150 parts), potassium persulfate (0.5 part) and sodium laurylsulfate (2 parts) were charged and heated to 70°C with stirring. Then, a monomer mixture of acrylonitrile (30 parts), $\alpha$-methylstyrene (70 parts) and tert.-dodecylmercaptan (0.2 part) was continuously added over 5 hours respectively. Then, the reaction system was heated to 75°C and kept at the same temperature for 5 hours to complete the polymerization to give an acrylonitrile-$\alpha$-methylstyrene copolymer latex. To the resultant latex, potassium chloride was added to salt out the polymer, which was dehydrated and dried to obtain a powdery polymer A-2-ii.

A-2-iii

In a reactor an interior of which had been replaced with nitrogen, pure water (120 parts) and potassium persulfate (0.3 part) were charged and heated to 65°C with stirring. Then, a monomer mixture of acrylonitrile (25 parts), N-phenyl maleimide (25 parts), styrene (50 parts) and tert.-dodecylmercaptan (0.3 part) and an aqueous solution of an emulsifier containing sodium laurylsulfate (30 parts) were continuously added over 4 hours, respectively. Then, the reaction system was heated to 70°C and kept at the same temperature for 3 hours to complete the polymerization to give an acrylonitrile-N-phenyl maleimide-styrene

copolymer latex. To the resultant latex, potassium chloride was added to salt out the polymer, which was dehydrated and dried to obtain a powdery polymer A-2-i.

Polymer (B)

As the graft copolymer (B), Graft copolymer (B)-1 or (B)-2 was used.

Table 3

| | Example No. | | | | | | Comparative Example No. | | | | |
|---|---|---|---|---|---|---|---|---|---|---|---|
| | 6 | 7 | 8 | 9 | 10 | 11 | 8 | 9 | 10 | 11 | 12 |
| Polymer (A) (%) | | | | | | | | | | | |
| Graft polymer | | | | | | | | | | | |
| A-1-i | 20 | 25 | 30 | 30 | | | 30 | 25 | 30 | | |
| A-1-iii | | | | | 30 | 20 | | | | 30 | 20 |
| Copolymer | | | | | | | | | | | |
| A-2-i | 77 | 70 | 60 | | | 70 | 70 | 70 | | | 70 |
| A-2-ii | | | | 55 | | | | | 55 | | |
| A-2-iii | | | | | 50 | | | | | 50 | |
| Graft copolymer (B) (%) | | | | | | | | | | | |
| B-1 | 3 | 5 | | 10 | | 10 | | | | | |
| B-2 | | | 10 | 5 | 20 | | | | | | |
| Talc (%) | | | | | | | | | | 20 | 10 |
| S.B block polymer (%) | | | | | | | | | 15 | | |
| E-GMA (%) | | | | | | | | 5 | | | |
| Properties | | | | | | | | | | | |
| Notched Izod impact strength 0.635cm (1/4"), 23°C J/m (kg.cm/cm) | 151.0 (15.4) | 249.0 (25.4) | 269.6 (27.5) | 317.7 (32.4) | 79.4 (8.1) | 74.5 (7.6) | 202.0 (20.6) | 170.6 (17.4) | 211.8 (21.6) | 42.2 (4.3) | 31.4 (3.2) |
| Gloss (%) (60° specular gloss) | 26 | 18 | 19 | 18 | 23 | 21 | 92 | 19 | 43 | 38 | 45 |
| Flow marks | No | No | No | No | No | No | No | No | Yes | Yes | Yes |

Table 4

| | Example No. | | Comparative Example No. | | | |
|---|---|---|---|---|---|---|
| | 12 | 13 | 13 | 14 | 15 | 16 |
| Polymer (A) (%) Graft polymer A-1-ii | 95 | 80 | 100 | 95 | 95 | 80 |
| Graft copolymer (B) (%) B-2 | 5 | 20 | | | | |
| Talc (%) | | | | | | 20 |
| S.B block polymer (%) | | | | | 5 | |
| E-GMA (%) | | | | 5 | | |
| **Properties** | | | | | | |
| Notched Izod impact strength 0.635cm (1/4"), 23°C J/m (kg.cm/cm) | 122.6 (12.5) | 179.4 (18.3) | 85.3 (8.7) | 76.5 (7.8) | 91.2 (9.3) | 36.3 (3.7) |
| Gloss (%) (60° specular gloss) | 28 | 17 | 91 | 31 | 47 | 38 |
| Flow marks | No | No | No | No | Yes | Yes |

## Claims

**1.** A thermoplastic resin composition comprising:

(A) a polymer selected from the group consisting of a conjugated diene rubber-reinforced resin which comprises a graft copolymer which is obtainable by polymerizing at least two monomers selected from the group consisting of aromatic vinyl compounds, cyanated vinyl compounds, alkyl unsaturated carboxylates and maleimide compounds in the presence of a conjugated diene rubber and a resin comprising a graft copolymer which is obtainable by polymerizing at least one monomer selected from the group consisting of aromatic vinyl compounds, cyanated vinyl compounds, alkyl unsaturated carboxylates and maleimide compounds in the presence of a rubber selected from (i) ethylene-α-olefin base rubbers, (ii) alkyl acrylate base rubbers which are obtainable by polymerizing or copolymerizing at least one monomer selected from the group consisting of $C_1$-$C_{16}$-alkyl acrylate and optionally at least one of other copolymerizable monomers in the presence or absence of a cross linking agent, (iii) ethylene-vinyl acetate copolymers and (iv) chlorinated polyethylene, each of which may be used independently or as a mixture and

(B) a graft copolymer which is obtainable by polymerizing

(b-1) at least one monomer selected from the group consisting of aromatic vinyl compounds, cyanated vinyl compounds and alkyl unsaturated carboxylates and

(b-2) at least one unsaturated epoxy monomer in the presence of an ethylene-α-olefin base rubber wherein the content of the graft polymer (B) is between 0,5 % by weight and 90 % by weight

based on a total weight of the resin (A) and the graft copolymer (B).

## Patentansprüche

**1.** Thermoplastische Harz-Zusammensetzung, umfassend:

(A) ein Polymer, ausgewählt aus der aus einem mit einem konjugiertem Dien kautschukverstärkten Harz bestehenden Gruppe, das ein Pfropf-Copolymer umfaßt, das erhältlich ist durch Polymerisieren von wenigstens zwei Monomeren, die ausgewählt sind aus der Gruppe, bestehend aus aromatischen Vinylverbindungen, cyanierten Vinylverbindungen, ungesättigten Alkylcarboxylaten und Maleinsäureimiden in Gegenwart eines konjugierten Dienkautschuks und eines Harzes, das ein Pfropf-Copolymer umfaßt, das erhältlich ist durch Polymerisieren wenigstens eines Monomers, das ausgewählt ist aus der Gruppe bestehend aus aromatischen Vinylverbindungen, cyanierten Vinylverbindungen, ungesättigten Alkylcarboxylaten und Maleinsäureimid-Verbindungen, in Gegenwart eines Kautschuks, der ausgewählt ist aus (i) Kautschuken auf der Basis von Ethylen-α-olefin, (ii) Kautschuken auf der Basis von Alkylacrylat, die erhältlich sind durch Polymerisieren oder Copolymerisieren wenigstens eines Monomers, das ausgewählt ist aus der Gruppe bestehend aus einem $C_1$-$C_{16}$-Alkylacrylat und wahlweise wenigstens einem anderen copolymerisierbaren Monomer, in Gegenwart oder in Abwesenheit eines Vernetzungsmittels, (iii) Ethylenvinylacetat-Copolymere und (iv) chloriertes Polyethylen,

von denen jedes unabhängig voneinander oder als Mischung verwendet werden kann, und

(B) ein Pfropf-Copolymer, das erhältlich ist durch das Polymerisieren von

(b-1) wenigstens eines Monomers, ausgewählt aus der aus aromatischen Vinylverbindungen, cyanierten Vinylverbindungen und ungesättigten Alkylcarboxylaten bestehenden Gruppe und

(b-2) wenigstens eines ungesättigten Epoxy-Monomers in Gegenwart eines Kautschuks auf der Basis von Ethylen-α-olefin,

wobei der Gehalt des Pfropfpolymers (B) zwischen 0,5 Gew.-% und 90 Gew.-% liegt, bezogen auf das Gesamtgewicht des Harzes (A) und des Pfropf-Copolymers (B).

## Revendications

**1.** Composition de résine thermoplastique comprenant :

(A) un polymère choisi dans le groupe constitué par une résine renforcée avec un caoutchouc de diène conjugué, qui comprend un copolymère greffé qui peut être obtenu par polymérisation d'au moins deux monomères choisis dans le groupe constitué par les composés vinyles aromatiques, les composés vinyles cyanés, les carboxylates insaturés d'alkyle et les composés maléimides, en présence d'un caoutchouc de diène conjugué, et une résine comprenant un copolymère greffé qui peut être obtenu par polymérisation d'au moins un monomère choisi dans le groupe constitué par les composés vinyles aromatiques, les composés vinyles cyanés, les carboxylates insaturés d'alkyle et les composés maléimides, en présence d'un caouthouc choisi parmi (i) les caoutchoucs à base d'éthylène-α-oléfine, (ii) les caoutchoucs à base d'acrylate d'alkyle que l'on peut obtenir par polymérisation ou copolymérisation d'au moins un monomère choisi dans le groupe constitué par un acrylate d'alkyle en $C_1$-$C_{16}$ et éventuellement au moins un autre monomère copolymérisable , en présence ou en l'absence d'un agent réticulant, (iii) les copolymères

d'éthylène-acétate de vinyle et (iv) la polyéthylène chloré, dont chacun peut être utilisé indépendamment ou sous forme d'un mélange et

(B) un copolymère greffé qui peut être obtenu par polymérisation de

(b-1) au moins un monomère choisi dans le groupe constitué par les composés vinyles aromatiques, les composés vinyles cyanés et les carboxylates insaturés d'alkyle et

(b-2) au moins un monomère époxy insaturé, en présence d'un caoutchouc à base d'éthylène-α-oléfine, où la teneur en polymère greffé (B) est entre 0,5 % en poids et 90 % en poids, relativement au poids total de la résine (A) et du copolymère greffé (B).